# EUROPÄISCHE PATENTSCHRIFT

(11) **EP 2 936 144 B1**
(45) Veröffentlichungstag und Bekanntmachung des Hinweises auf die Patenterteilung: **13.04.2022**
(21) Anmeldenummer: 13814032.2
(22) Anmeldetag: 25.11.2013
(51) Int. Cl.: G01N 30/91, G01N 1/10, G01N 35/10, B01L 9/00, G01N 1/02, G01N 1/40, B01D 15/08, B01L 3/02

(54) **VERFAHREN UND VORRICHTUNG ZUR DURCHFÜHRUNG EINER DÜNNSCHICHTCHROMATOGRAPHIE**
METHOD AND DEVICE FOR CARRYING OUT THIN-FILM CHROMATOGRAPHY
PROCÉDÉ ET DISPOSITIF DE RÉALISATION D'UNE CHROMATOGRAPHIE SUR COUCHE MINCE

(30) Priorität: 20.12.2012 EP 12008479
(43) Veröffentlichungstag der Anmeldung: 28.10.2015
(73) Patentinhaber: Merck Patent GmbH, 64293 Darmstadt (DE)
(72) Erfinder: SCHULZ, Michael, 64285 Darmstadt (DE)
(86) Internationale Anmeldenummer: PCT/EP2013/003553
(87) Internationale Veröffentlichungsnummer: WO 2014/094958

(56) Entgegenhaltungen:
- DE-A1- 2 558 672
- DE-A1- 2 818 576
- US-A1- 2011 284 735
- US-A1- 2012 125 127
- LINDSEY J S ET AL: "ROBOTIC WORK STATION FOR MICROSCALE SYNTHETIC CHEMISTRY: ON-LINE ABSORPTION SPECTROSCOPY, QUANTITATIVE AUTOMATED THIN-LAYER CHROMATOGRAPHY, AND MULTIPLE REACTIONS IN PARALLEL", REVIEW OF SCIENTIFIC INSTRUMENTS, AIP, MELVILLE, NY, US, Bd. 59, Nr. 6, Juni 1988 (1988-06), Seiten 940-950, XP000005833, ISSN: 0034-6748, DOI: 10.1063/1.1139755
- HARDIN J H ET AL: "AUTOMATING COMBINATORIAL CHEMISTRY: A PRIMER ON BENCHTOP ROBOTIC SYSTEMS", MOLECULAR DIVERSITY, ESCOM SCIENCE PUBLISHERS, LEIDEN, NL, Bd. 1, 1. August 1996 (1996-08-01), Seiten 270-274, XP000669679, ISSN: 1381-1991, DOI: 10.1007/BF01715532
- MICHAEL J. FORD ET AL: "An improved thin-layer chromatography/mass spectrometry coupling using a surface sampling probe electrospray ion trap system", RAPID COMMUNICATIONS IN MASS SPECTROMETRY, Bd. 18, Nr. 12, 30. Juni 2004 (2004-06-30) , Seiten 1303-1309, XP055103227, ISSN: 0951-4198, DOI: 10.1002/rcm.1486
- GARY J. VAN BERKEL ET AL: "Application of a Liquid Extraction Based Sealing Surface Sampling Probe for Mass Spectrometric Analysis of Dried Blood Spots and Mouse Whole-Body Thin Tissue Sections", ANALYTICAL CHEMISTRY, Bd. 81, Nr. 21, 9. Oktober 2009 (2009-10-09), - 1. November 2009 (2009-11-01), Seiten 9146-9152, XP055018157, ISSN: 0003-2700, DOI: 10.1021/ac901712b
- Ajai Prakash Gupta ET AL: "HPTLC-MS Coupling: New Dimension of HPTLC" In: "High-Performance Thin-Layer Chromatography (HPTLC)", 20 September 2010 (2010-09-20), Springer Berlin Heidelberg, Berlin, Heidelberg, XP055630509, ISBN: 978-3-642-14025-9 pages 311-318, DOI: 10.1007/978-3-642-14025-9_15,

## Beschreibung

Die Erfindung betrifft eine Vorrichtung und ein Verfahren zur Durchführung einer Dünnschichtchromatographie, wobei eine flüssige Probe auf eine Trennschicht aufgebracht wird, wobei anschließend ein Fließmittel auf die Trennschicht aufgegeben und in Kontakt mit der Probe gebracht wird, und wobei nach einer Entwicklungsphase ein Dünnschichtchromatogramm entsteht und ausgewertet werden kann.

Die Dünnschichtchromatographie wird seit vielen Jahren zur Analyse von Probensubstanzen eingesetzt und verwendet. Ein Fließmittel wandert aufgrund der Kapillarkräfte an einem festen, feinporigen Trägermaterial einer Trennschicht entlang und verschiedene Probensubstanzen werden von dem Fließmittel unterschiedlich schnell, beziehungsweise effizient mitgeführt und die innerhalb einer vorgegebenen Entwicklungsdauer zurückgelegte Strecke einer Komponente der Probe ist für die betreffende Komponente charakteristisch, sodass anhand einer räumlichen Auswertung der Verteilung der Probensubstanzen nach der Entwicklungsphase die Zusammensetzung der Probe ermittelt werden kann.

Die Dünnschichtchromatographie wird in vielen Anwendungsbereichen umfangreich zur Analyse unbekannter Proben eingesetzt. Um die Durchführung der Dünnschichtchromatographie zu erleichtern sind verschiedene Ansätze bekannt, um einzelne Verfahrensabschnitte der Dünnschichtchromatographie zu automatisieren. Aus DE 2 401 382 ist beispielsweise bekannt, dass die Probe mit Hilfe einer Kapillare automatisiert auf eine Trennschicht aufgetragen werden kann. Die Kapillare muss nach jedem Auftragungsvorgang gereinigt werden, um eine Kontamination einer neuen Probe mit Resten früherer Proben zu vermeiden.

Aus der Praxis sind weitere Entwicklungen bekannt, mit denen einzelne Verfahrensschritte automatisiert werden können, die für die Durchführung einer Dünnschichtchromatographie erforderlich sind.

In CH 692 008 A5 wird ein Verfahren beschrieben, bei dem eine flüssige Probe sowie ein Fließmittel auf eine Trennschicht aufgesprüht werden kann. Die hierzu erforderliche Vorrichtung zur Durchführung der Dünnschichtchromatographie weist eine in einer Ebene verfahrbare Auftragseinrichtung zum automatisierten Aufbringen einer Probe und eines Fließmittels auf einer Trennschicht auf, die zum Entwickeln notwendig ist und verwendet wird. Dabei wird aus einem Druckkopf ein Flüssigkeitsstrahl ausgestoßen, mit dem entweder eine Probe oder das Fließmittel auf die Trennschicht aufgesprüht werden können. Auch bei dieser Vorrichtung ist es erforderlich den Druckkopf nach jedem Auftragungsvorgang zu reinigen. Ansonsten kann es durch in dem Druckkopf verbleibenden Reste eines früheren Auftragungsvorgangs dazu kommen, dass verschiedene Proben, beziehungsweise verschiedene Dünnschichtchromatogramme durch Probensubstanzreste oder Fließmittelreste verunreinigt werden und diese nicht mehr sinnvoll ausgewertet werden können. Obwohl die Durchführung einer Dünnschichtchromatographie durch eine derartige Vorrichtung automatisiert werden kann, wird eine rasche Durchführung der Dünnschichtchromatographie durch zahlreiche Reinigungsvorgänge verhindert, die zwischen einzelnen automatisierten Auftragungsvorgängen für die Probe, beziehungsweise für das Fließmittel zwingend erforderlich sind.

Lindsey J S et al., Review of scientific instruments, AIP, Melville, NY, US, Bd. 59, Nr. 6, 1. Juni 1988, Seiten 940-950 sowie DE 2558672 offenbaren Vorrichtungen zur automatisierten Durchführung einer Dünnschichtchromatographie.

Hardin J H et al., "Automating Combinatorial Chemistry: A Primer on Benchtop Robotic Systems", Molecular Diversity, ESCOM Science Publishers, Leiden NL, Bd. 1, 1. Januar 1995, Seiten 270-274 offenbart einen Pipettierautomaten mit einmalig zu verwendenden Pipettenspitzen.

Es sind derzeit keine Verfahren, beziehungsweise Vorrichtungen bekannt, die eine automatisierte und schnelle Durchführung mehrerer Dünnschichtchromatographievorgänge ermöglichen und gleichzeitig gewährleisten, dass eine Verunreinigung einzelner Messungen durch Kontamination mit Resten vorangegangener oder parallel durchgeführter Messungen ausgeschlossen werden kann.

Es wird deshalb als eine Aufgabe der vorliegenden Erfindung angesehen, die bekannten Verfahren zur Dünnschichtchromatographie dahingehend zu verbessern, dass möglichst rasch und weitgehend automatisiert eine Dünnschichtchromatographie durchgeführt und ausgewertet werden kann.

Diese Aufgabe wird erfindungsgemäß dadurch gelöst, dass die flüssige Probe mit Hilfe eines Pipettierautomaten mit einer für jeden Proben-Auftragungsvorgang neuen Pipettenspitze aus einem Proben-Vorratsbehälter aufgenommen und auf die Trennschicht aufgebracht wird. Die für einen Proben-Auftragungsvorgang verwendete Pipettenspitze kann nach jedem Auftragungsvorgang von dem Pipettierautomaten getrennt, entfernt und entsorgt werden. Eine Kontamination nachfolgender Proben-Auftragungsvorgänge durch Reste einer Probe, die während eines vorangehenden Auftragungsvorgangs auf die Trennschicht aufgetragen wurde, können dadurch grundsätzlich ausgeschlossen werden.

Gegenstand der vorliegenden Erfindung ist daher ein Verfahren zur Durchführung einer Dünnschichtchromatographie, wobei ein oder mehrere flüssige Proben auf eine Trennschicht (14) aufgebracht werden, wobei anschließend ein Fließmittel auf die Trennschicht (14) aufgegeben und in Kontakt mit der Probe gebracht wird, und wobei nach einer Entwicklungsphase ein Dünnschichtchromatogramm entsteht, dadurch gekennzeichnet, dass die ein oder mehreren flüssigen Proben mit Hilfe eines Pipettierautomaten (4) mit einer für jeden Proben-Auftragungsvorgang neuen Pipettenspitze (8, 9) aus einem oder mehreren Proben-Vorratsbehälter (11, 12, 13) aufgenommen und auf die Trennschicht (14) aufgebracht werden und wobei ein mit Fließmittel befüllter Fließmittel-Vorratsbehälter (16) über eine Kontakteinrichtung (22) aus einem kapillaraktiven Material mit der Trennschicht (14) verbunden wird.

Dabei kann dieselbe Probe aus einem Vorratsbehälter ein- oder mehrfach aufgetragen werden und/oder zwei oder mehrere verschiedene Proben aus verschiedenen Proben-Vorratsbehältern aufgetragen werden.

In einer Ausführungsform des erfindungsmäßen Verfahrens wird das Fließmittel mit einer für jeden Fließmittel-Auftragungsvorgang neuen Pipettenspitze (8, 9) aus einem Fließmittel-Vorratsbehälter (16) aufgenommen und auf die Trennschicht (14) aufgegeben.

In einer Ausführungsform des erfindungsgemäßen Verfahrens wird ein Eluent mit einer für jede Elution neuen Pipettenspitze (8, 9) aufgenommen und mit einem auszuwertenden Bereich der Trennschicht (14) in Kontakt gebracht und das Eluat einer Auswerteeinrichtung (20) zugeführt. Bevorzugt erfolgt die Zuführung zu der Auswerteeinrichtung dadurch, dass das Eluat wieder in die Pipettenspitze aufgenommen wird und mit dieser der Auswerteeinrichtung zugeführt wird.

In einer anderen Ausführungsform wird mit einer für jeden Austrennvorgang neuen Pipettenspitze (8, 9) ein auszuwertender Bereich der Trennschicht (14) ausgestanzt und einer Auswerteeinrichtung (20) zugeführt wird.

In einer anderen Ausführungsform wird mit einer für jede Elution neuen Pipettenspitze (8, 9) ein auszuwertender Bereich der Trennschicht (14) bis auf den Basisträger abgedichtet, das im abgedichteten Bereich befindliche Sorbens mit einem Eluent in Kontakt gebracht und das entstehende Eluat wieder in die Pipettenspitze aufgenommen und einer Auswerteeinrichtung (20) zugeführt.

Gegenstand der vorliegenden Erfindung ist auch eine Vorrichtung (5) zur automatisierten Durchführung einer Dünnschichtchromatographie mit einer Trägerplatte (15) zur Aufnahme einer Trennschicht (14), zumindest mit einem ersten Vorratsbehälter (10, 11, 12, 13) für die Aufnahme einer Probe und mit einem zweiten Vorratsbehälter (16) für die Aufnahme eines Fließmittels, dadurch gekennzeichnet, dass die Vorrichtung (5) eine über eine Oberfläche der Trägerplatte (15) sowie über den ersten Vorratsbehälter (10, 11, 12, 13) und den zweiten Vorratsbehälter (16) verfahrbare automatische Pipettiereinrichtung (4) und einen Vorrat an Pipettenspitzen (8, 9) aufweist, die nacheinander von der Pipettiereinrichtung (4) aufgenommen, verwendet und anschließend wieder von der Pipettiereinrichtung (4) gelöst und entfernt werden können. Weiterhin ist die Trägerplatte (15) über eine Kontakteinrichtung (22) aus einem kapillaraktiven Material mit dem Vorratsbehälter (16) für das Fließmittel verbindbar.

In einer Ausführungsform ist die Trägerplate (15) verfahrbar in einem Gehäuse der Vorrichtung (5) angeordnet.

In einer Ausführungsform weist die Vorrichtung (5) einen Entwicklungsbehälter für die Aufnahme der Trägerplatte (15) auf. Dieser Entwicklungsbehälter ist typischerweise im Wesentlichen geschlossen, so dass konstante Umgebundsbedingungen während der Entwicklung gewährleistet sind.

In einer Ausführungsform sind in einem Vorratsbehälter (7) für Pipettenspitzen (8, 9) mindestens zwei verschiedene Arten von Pipettenspitzen (8, 9) bevorratet.

In einer bevorzugten Ausführungsform weist die Vorrichtung (5) einen Vorratsbehälter (21) für ein Elutionsmittel auf.

In einer Ausführungsform weist die Vorrichtung (5) Pipettenspitzen (8, 9) zum Heraustrennen eines Bereichs der Trennschicht (14) und zur Übergabe des herausgetrennten Bereichs der Trennschicht (14) an eine Auswerteeinheit (20) auf.

In einer Ausführungsform weist die Vorrichtung (5) Pipettenspitzen (8, 9) zum Abdichten eines Sorbensbereichs der Trennschicht (14) gegenüber dem Basisträger, Elution des Sorbensbereichs mit Elutionsmittel und zur Übergabe des Eluats an eine Auswerteeinheit (20) auf.

Erfindungsgemäß besteht eine Trennschicht aus einem Basisträger, auf den eine Sorbensschicht aufgebracht ist. Trennschichten für die Dünnschichtchromatographie, auch DC (Dünnschicht)-Platten genannt, sind dem Fachmann bekannt. Typischerweise sind dabei Sorbensschichten aus Kieselgel oder mit funktionellen Gruppen wie Aminogruppen oder Alkylgruppen derivatisiertem Kieselgel oder auch underivatisertem oder derivatisiertem Aluminiumoxid, Magnesiumsilikat, Kieselgur, Polyamid oder Cellulose auf einen Basisträger aus Glas, Plastik oder Aluminium aufgebracht.

Fließmittel für die Dünnschichtchromatographie sind dem Fachmann bekannt. Der Fachmann kann ein für die Trennschicht und die zu analysierende Probe geeignetes Fließmittel finden.

Erfindungsgemäß kann ein Auftragungsvorgang einen oder mehrere Pipettiervorgänge umfassen, wobei in jedem Fall nur Flüssigkeit aus einem Vorratsbehälter entnommen wird. Bevorzugt wird pro Auftragungsvorgang nur einmal pipettiert. Es ist jedoch auch möglich, dass beispielsweise bei der Befüllung eines Vorratsbehälters für die Aufnahme eines Fließmittels, der über eine Kontakteinrichtung aus einem kapillaraktiven Material mit der Trennschicht verbunden wird, zwei- oder mehrmaliges Pipettieren notwendig ist, um eine ausreichende Füllhöhe des Vorratsbehälters zu erzeugen. In diesem Fall kann das zwei- oder mehrmalige Pipettieren mit derselben Pipettenspitze in einem Auftragungsvorgang durchgeführt werden.

Proben sind erfindungsgemäß Flüssigkeiten, deren Zusammensetzung dünnschichtchromatographisch untersucht werden soll. Typischerweise enthalten diese Flüssigkeiten ein oder mehrere darin gelöste Komponenten oder Probensubstanzen.

Es sind verschiedene Pipettenspitzen handelsüblich und kostengünstig erhältlich, die für eine einmalige oder kurzzeitige Verwendung mit dem Pipettierautomaten geeignet sind. Für die Auftragung der Proben werden typischerweise je nach Konzentration der in der Probe befindlichen Probensubstanzen Pipettenspitzen zum Pipettieren von Probenvolumina zwischen 0.1 und 10 µl eingesetzt, beispielsweise Pipettenspitzen zum Pipettieren von 0.1 bis 2 µl, von 1 bis 5 µl oder von bis zu 10 µl.

Für das Pipettieren des Fließmittels werden typischerweise Pipettenspitzen eingesetzt, die für Flüssigkeitsvolumina zwischen 100 µl und 1 ml geeignet sind.

Im Falle der Elution, werden typischerweise Pipettenspitzen für Volumnia zwischen 10 und 100 µl eingesetzt.

Es hat sich gezeigt, dass mit einem Pipettierautomaten in Verbindung mit geeigneten Pipettenspitzen eine ausreichend genaue und präzise Dosierung und Auftragung der Probe auf der Trennschicht möglich ist.

Anschließend kann ein Fließmittel auf die Trennschicht aufgebracht und das Chromatogramm entwickelt werden.

In einer Ausführungsform ist vorgesehen, dass das Fließmittel mit einer für jeden Fließmittel-Auftragungsvorgang neuen Pipettenspitze aus einem Fließmittel-Vorratsbehälter aufgenommen und auf die Trennschicht aufgebracht wird. Der Pipettierautomat kann dabei in vorteilhafter Weise nicht nur für die Auftragung der Probe sondern auch für die Auftragung des Fließmittels direkt auf die Trennschicht verwendet werden. Die jeweils unterschiedlichen Mengen und die Positionierungsgenauigkeit der verschiedenen Substanzen kann durch eine geeignete Auswahl von Pipettenspitzen unterstützt und beschleunigt werden. Wird das Fließmittel direkt auf die Trennschicht pipettiert, werden typischerweise Zirkularchromatogramme entwickelt. Dazu wird das Fließmittel in einer Ausführungsform direkt auf den zuvor aufgetragenen Probenfleck pipettiert. Durch Kapillarkräfte kommt es zu Ausbildung einer kreisförmigen Fließmittelfront und die Probe wird zirkular nach außen transportiert. Alternativ können mehrere Proben in einem Kreis auf die Trennschicht aufgebracht werden. Das Fließmittel wird dann in den Kreismittelpunkt aufgetragen und bildet eine kreisförmige Fließmittelfront, die die Proben in den jeweiligen Kreissegmenten nach außen transportiert.

Erfindungsgemäß wird ein mit Fließmittel befüllter Fließmittel-Vorratsbehälter über eine Kontakteinrichtung mit der Trennschicht verbunden. Die Kontakteinrichtung besteht aus einem kapillaraktiven Material, z. B. einer Fritte. Die Kontakteinrichtung kann beispielsweise eine schwenkbar gelagerte Platte eines porösen und kapillaraktiven Materials aufweisen, die mit einem Ende in den mit Fließmittel befüllten Fließmittel-Vorratsbehälter ragt und deren anderes Ende aus einer Ausgangposition in eine Entwicklungsposition verschwenkt werden kann, in der die Kontakteinrichtung mit einer Seitenkante der Trennschicht verbunden ist und diese kontinuierlich mit dem Fließmittel benetzt. Es ist ebenfalls denkbar, dass die Kontakteinrichtung aus einem L-förmigen Kontaktelement besteht, dessen erstes Ende mit dem Fließmittel-Vorratsbehälter in Verbindung steht und dessen zweites Ende längs einer Seitenkante mit der Trennschicht verbunden oder von der Trennschicht entfernt werden kann. Über die Kontakteinrichtung kann ohne größeren Aufwand eine vergleichsweise große Menge des Fließmittels auf die Trennschicht aufgebracht werden. Die erfindungsgemäße Vorrichtung weist einen Fließmittel-Vorratsbehälter auf, aus dem über eine Kontakteinrichtung Fließmittel mit der Trennschicht in Kontakt gebracht werden kann. Dieser Fließmittel-Vorratsbehälter wird bevorzugt mithilfe des Pipettierautomaten befüllt. Dazu werden aus einem weiteren Fließmittel-Vorratsbehälter je nach Art der Trennschicht typischerweise 100 µl und 5 ml Fließmittel in den Vorratsbehälter mit der Kontakteinrichtung pipettiert. Dazu kann einmal oder mehrfach zudosiert werden. Auf diese Weise kann zudem durch das Zupipettieren der Fließmittels in den Fließmittel-Vorratsbehälter mit Kontakteinrichtung der Start der Dünnschichtchromatographie bestimmt und kontrolliert werden. Sobald das Fließmittel in den Fließmittel-Vorratsbehälter mit Kontakteinrichtung pipettiert wird, wandert es durch Kapillarkräfte zu der Trennschicht und die chromatographische Auftrennung der Probe beginnt.

Zum Beenden der chromatographischen Auftrennung kann die Kontakteinrichtung von der Trennschicht entfernt werden, so dass kein weiteres Fließmittel in die Trennschicht wandern kann. Zusätzlich oder alternativ kann das noch im Vorratsbehälter befindliche Fließmittel durch Pipettieren daraus entfernt werden. Auf diese Weise kann auch ohne Entfernen der Kontakteinrichtung die chromatographische Auftrennung beendet werden.

Nach Beendigung der chromatographischen Auftrennung, d.h. nach der Entwicklung des Chromatogramms, wird typischerweise das noch auf der Trennschicht befindliche Fließmittel zumindest teilweise z.B. durch Abdampfen entfernt. Dazu geeignete Apparaturen wie z.B. Wärmelampen oder Ventilatoren können in der erfindungsgemäßen Vorrichtung enthalten sein. Die Auswertung des Chromatogramms kann nach dem Fachmann bekannten Methoden erfolgen.

Gemäß einer vorteilhaften Ausgestaltung des Erfindungsgedankens ist für die Auswertung vorgesehen, dass ein Eluent mit einer für jede Elution neuen Pipettenspitze aufgenommen und mit einem auszuwertenden Bereich der Trennschicht in Kontakt gebracht wird, und dass das Eluat einer Auswerteeinrichtung zugeführt wird. In einer bevorzugte Ausführungsform, wenn die Trennschicht hydrophob ist, wird ein Elutionsmittel mit ausreichend hohem Wasseranteil verwendet, so dass das Elutionsmittel mit der Pipettenspitze mit der Trennschicht in Kontakt gebracht wird und dort als Tropfen verweilt. Durch den Kontakt mit der Trennschicht wird Probensubstanz aus der Trennschicht gelöst. Nach einer Einwirkzeit von typischerweise 1 bis 10 Sekunden wird das Elutionsmittel mit der darin gelösten Probe wieder von der Pipettenspitze aufgenommen und kann in eine Auswerteeinheit transportiert werden. Das Eluat kann beispielsweise einem Massenspektrometer zugeführt werden, um eine äußerst präzise Auswertung des Dünnschichtchromatogramms zu ermöglichen.

Alternativ kann mit einer für jeden Austrennvorgang neuen Pipettenspitze ein auszuwertender Bereich der Trennschicht ausgestanzt und einer Auswerteeinrichtung, beispielsweise einem Massenspektrometer, zugeführt werden.

In einer anderen Ausführungsform, die wie das Ausstanzen auch für hydrophobe und hydrophile Trennschichten geeignet ist, wird mit einer bevorzugt mit einem Schneidring versehenen Pipettenspitze durch die Sorbensschicht gedrückt und mit dem Schneidring gegenüber dem Basisträger abgedichtet. Dann wird ein entsprechendes Elutionsmittel in die Pipettenspitze zugegeben und der durch die Pipettenspitze abgegrenzte Sorbensbereich mit dem Elutionsmittel getränkt und eluiert. Eine Pipettenspitze mit Schneidring ist eine Pipettenspitze, deren unterer Rand so beschaffen ist, dass er stabil und trotzdem fein genug ist, durch die Sorbensschicht der Trennschicht auf den Basisträger gedrückt zu werden und dort abzudichten.

Die oben genannten Ausführungsformen zeigen, dass auch die Extraktion und Zuführung einer Probe eines Dünnschichtchromatogramms zu einer Auswerteeinrichtung auf diese Weise mit Hilfe des Pipettierautomaten durchgeführt werden kann. Das Austrennen und Überführen der für die Auswertung mit einem der üblichen Analysegeräte erforderlichen Probe kann ohne nennenswerte Zeitverzögerung mit der bereits für die Auftragung und die Entwicklung der Probe verwendeten Apparatur durchgeführt werden.

Um eine möglichst schnelle Auswertung mit externen Analysevorrichtungen zu ermöglichen kann vorgesehen sein, dass ein entwickeltes Dünnschichtchromatogramm ausschließlich durch externe Analyseneinrichtungen ausgewertet wird und diesen Analyseneinrichtungen nacheinander einzelne auszuwertende Bereiche der Trennschicht oder einzelne Eluate zugeführt werden. Es ist ebenfalls denkbar, dass die Trennschicht mit optischen Analyseeinrichtungen, wie z.B. einer UV-Lampe, erfasst und die dem Chromatogramm entnehmbar optischen Informationen ausgewertet werden. Sofern eine Behandlung oder Aufbereitung des Chromatogramms erforderlich oder zweckmäßig erscheint, können entsprechende Verfahrensschritte, z.B. eine chemische Derivatisierung, vor der optischen Auswertung durchgeführt werden.

Die für die Entwicklung des Chromatogramms verwendete Trennschicht kann dabei entweder unbeweglich in einer geeigneten Messvorrichtung gelagert werden oder zusammen mit einer die Trennschicht aufnehmenden und fixierenden Trägerplatte innerhalb eines Gehäuses der Vorrichtung verfahren, beziehungsweise verlagert werden. Für einzelne Anwendungsfälle kann das zweckmäßig sein, die Trennschicht zu verschwenken oder für einen manuell durchzuführenden Behandlungsvorgang von der Trägerplatte oder einem geeigneten Trägerplattenhalter zu lösen und manuell zu bearbeiten.

Die Erfindung betrifft auch eine Vorrichtung zur automatisierten Durchführung einer Dünnschichtchromatographie mit einer Trägerplatte zur Aufnahme einer Trägerschicht, mit einem ersten Vorratsbehälter für die Aufnahme einer Probe und mit einem zweiten Vorratsbehälter für die Aufnahme eines Fließmittels. Bevorzugt weist die Vorrichtung weitere Vorratsbehälter für die Aufnahme von Proben, Fließmittel oder Elutionsmittel auf. Erfindungsgemäß ist weiterhin vorgesehen, dass die Vorrichtung eine Pipettiereinrichtung aufweist, die zumindest über eine Oberfläche der Trägerplatte sowie über den ersten Vorratsbehälter und den zweiten Vorratsbehälter verfahrbar ist und einen Vorrat an Pipettenspitzen aufweist, die nacheinander von der Pipettiereinrichtung aufgenommen, verwendet und anschließend wieder gelöst und entfernt werden können. Pipettenspitzen sind für unterschiedliche Probenvolumina und Probensubstanzen in verschiedenen Ausgestaltungen handelsüblich und kostengünstig erhältlich. Durch die Verwendung von jeweils neuen Pipettenspitzen für einzelne Auftragungs- oder Behandlungsvorgänge kann eine aufwendige Reinigung einer Auftragungseinheit vermieden werden und gleichzeitig sichergestellt werden, dass eine Kontamination nachfolgender Auftragungsvorgänge, beziehungsweise Messungen durch Reste einer Probensubstanz oder eines Fließmittels ausgeschlossen werden, dass bei vorausgegangenen Auftragungsvorgängen oder Messungen verwendet wurde.

In einer Ausführungsform der erfindungsgemäßen Vorrichtung ist die Trägerplatte kühl- und heizbar. Dadurch kann die auf der Trägerplatte befindliche Trennschicht während der Entwicklung gekühlt werden und so ein Abdampfen des Fließmittels vermindert werden. Weiterhin kann beispielsweise nach der Entwicklung geheizt werden, um das Fließmittel von der Trennschicht zu entfernen.

Einer vorteilhaften Ausgestaltung des Erfindungsgedankens zufolge ist vorgesehen, dass die Trägerplatte verfahrbar in einem Gehäuse der Vorrichtung angeordnet ist. Um die Zeitdauer zu verkürzen, die für die Auftragung mehrerer Proben auf einer Trennschicht notwendig ist, und um die anschließende Entwicklung der Trennschicht zu verkürzen kann es zweckmäßig sein, die Trägerplatte zusammen mit der auf der Trägerplatte angeordneten Trennschicht relativ zu einem automatisiert bewegbaren Pipettierarm einer automatische Pipettiereinrichtung zu verfahren, um die einzelnen Verfahrwege der Pipettiereinrichtung zu verkürzen. Es ist ebenfalls möglich und im Hinblick auf eine rasche und zuverlässige Entwicklung des Chromatogramms vorteilhaft, die mit Proben und mit einem Fließmittel versehene Trennschicht zumindest während der Entwicklung in einen weitgehend abgeschlossenen Entwicklungsbehälter zu verfahren und zu diesem Zweck kann die Vorrichtung einen im Wesentlichen geschlossenen Entwicklungsbehälter aufweisen, der für die Aufnahme der Trägerplatte geeignet und ausgelegt ist.

Um die unterschiedlichen Anforderungen für die Auftragung der Probe und die Aufbringung des Fließmittels möglichst rasch und zuverlässig erfüllen zu können ist in einer Ausführungsform vorgesehen, dass in dem Vorratsbehälter für Pipettenspitzen mindestens zwei verschiedene Pipettenspitzen bevorratet sind. Eine erste Art von Pipettenspitzen kann für die Aufbringung einzelner, kleiner Mengen einer Probe ausgelegt sein. Eine zweite Art von Pipettenspitzen kann ein größeres Aufnahmevolumen aufweisen und für die Aufnahme und Auftragung des Fließmittels auf die Trennschicht geeignet sein.

Vorzugsweise ist vorgesehen, dass die Vorrichtung einen Vorratsbehälter für ein Elutionsmittel aufweist. Gegebenenfalls kann eine weitere Art von Pipettenspitzen zweckmäßig oder erforderlich sein, die für die Aufnahme des Elutionsmittels aus dem Vorratsbehälter für das Elutionsmittel, für die Kontaktierung eines auszuwertenden Bereichs der Trennschicht mit dem Elutionsmittel und für die anschließende Überführung des dabei gewonnenen Eluats an einer Auswerteeinrichtung verwendet werden.

Die nach der Entwicklung des Dünnschichtchromatogramms erforderliche Auswertung kann dadurch beschleunigt werden, dass eine Auswerteeinrichtung mit der Vorrichtung gekoppelt wird, so dass einzelne Eluatmengen oder Proben von der Trennschicht gewonnen und automatisiert der Auswerteeinrichtung zugeführt werden können. Für die Überführung des Eluats oder einzelner Proben der Trennschicht kann die Pipettiereinrichtung verwendet werden.

Gemäß einer Ausgestaltung des Erfindungsgedankens ist vorgesehen, dass die Vorrichtung Pipettenspitzen zum Heraustrennen eines Bereichs der Trennschicht und zur Übergabe des herausgetrennten Bereichs der Trennschicht an einer Auswerteeinheit aufweist.

Gemäß einer anderen Ausgestaltung des Erfindungsgedankens ist vorgesehen, dass die Vorrichtung Pipettenspitzen aufweist, die die Sorbensschicht durchdringen und mit dem Basisträger abdichten können.

In einer weiteren Ausführungsform weist die Vorrichtung ein Bauteil zur Abluft-Entfernung auf. Dies kann beispielsweise ein integrierter Ventilator sein oder ein Anschlußstutzen für einen externen Ventilator oder eine Absaugvorrichtung.

In einer anderen Ausführungsform weist die erfindungsgemäße Vorrichtung zusätzlich einen Vorratsbehälter für Trennschichten auf. In einer bevorzugten Variante dieser Ausführungsform kann automatisch eine Trennschicht aus dem Vorratsbehälter entnommen und auf die Trägerplatte gelegt werden.

In einer weiteren Ausführungsform weist die erfindungsgemäße Vorrichtung einen Abfallbehälter für Lösungsmittel auf, in den Reste des Fließmittels oder der Proben pipettiert werden können. Dieser Abfallbehälter kann im Falle der Beendigung der chromatographischen Trennung zur Entfernung bzw. Entsorgung des überschüssigen Fließmittels aus dem Vorratsbehälter mit Kontakteinrichtung genutzt werden oder in anderen Pipettiervorgängen zum Entleeren der Pipettenspitze vor deren Entsorgung im Abfall.

Die erfindungsgemäße Vorrichtung weist ein oder mehrere Fließmittel-Vorratsbehälter mit einer Kontakteinrichtung auf. Die Kontakteinrichtung besteht aus einem kapillaraktiven Material, z.B. einer Fritte.

Vorrichtungen mit zwei Fließmittel-Vorratsbehältern mit Kontakteinrichtung bieten die Möglichkeit, eine Trennschicht in zwei Richtungen zu entwickeln.

Bevorzugt sind die Fließmittel-Vorratsbehälter mit Kontakteinrichtung mit einer Kühlvorrichtung versehen, damit ein zu schnelles Abdampfen des Fließmittels verhindert wird. Auch andere Vorratsbehälter können optional kühlbar sein.

Nachfolgend wird die vorliegende Erfindung anhand von Zeichnungen näher erläuter. Es zeigt:
Fig. 1 eine schematische Darstellung eines erfindungsgemäßen Verfahrensablaufs bei der Durchführung und Auswertung einer Dünnschichtchromatographie,
Fig. 2 eine exemplarische Ansicht einer Vorrichtung zur Durchführung eines Dünnschichtchromatographieverfahrens und
Fig. 3 eine schematische Schnittansicht einer Vorrichtung zur automatisierten Aufgabe eines Fließmittels auf eine Trennschicht, auf die bereits mehrere Proben aufgetragen wurden.

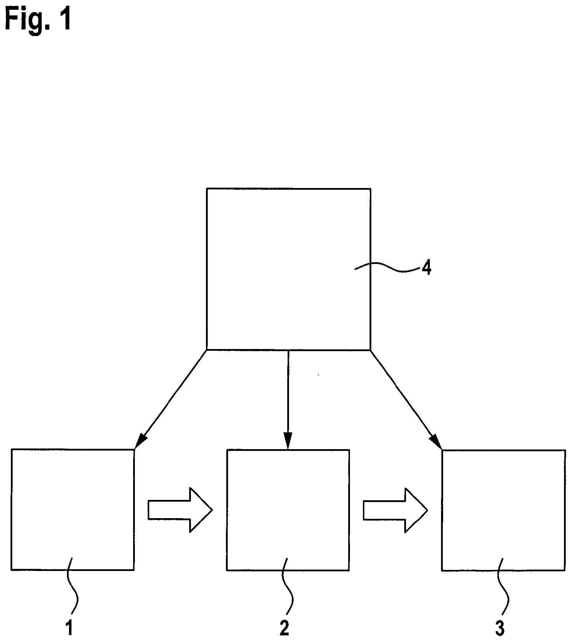

Für die Erzeugung und Auswertung einer Dünnschichtchromatographie, die schematisch in Fig. 1 dargestellt ist, wird zunächst in einem ersten Verfahrensschritt 1 eine flüssige Probe auf eine Trennschicht mit einer geeigneten Sorbensschicht wie beispielsweise Kieselgel aufgebracht. In einem nachfolgenden Entwicklungsschritt 2 wird eine ausreichende Menge eines ebenfalls flüssigen Fließmittels auf einen ersten Bereich der Trennschicht aufgegeben. Auf Grund der Kapillarkräfte in der Trennschicht wandert das Fließmittel ausgehend von dem ersten Bereich durch die Trennschicht weiter. Dabei nimmt das Fließmittel unterschiedliche Komponenten der Probe während der kapillarkraftbedingten Wanderung entlang der Trennschicht unterschiedlich effizient mit. Mit zunehmender Zeit wird eine räumliche Verteilung der einzelnen Komponenten auf der Trennschicht erzeugt, die für die einzelnen Komponenten charakteristisch ist. In einem nachfolgenden Auswerteschritt 3 erfolgt eine ortsaufgelöste Auswertung und Analyse der einzelnen Komponenten, die während des Entwicklungsschritts 2 räumlich voneinander getrennt wurden.

Erfindungsgemäß ist vorgesehen, dass eine automatisierte Pipettiereinrichtung 4 zumindest für die Aufgabe der Proben auf die Trennschicht während des ersten Verfahrensschritts 1 verwendet wird. Um eine Kontamination unterschiedlicher Proben oder Auftragungsvorgänge von Proben auf die Trennschicht zu vermeiden werden bei jedem Wechsel der Proben oder sogar für jeden Pipettiervorgang jeweils eine neue Pipettenspitze mit der Pipettiereinrichtung 4 verbunden.

In vorteilhafter Weise wird die automatisierte Pipettiereinrichtung 4 auch unmittelbar vor und während des Entwicklungsschritts 2 für die Aufgabe des Fließmittels auf die Trennschicht oder in den Vorratsbehälter mit Kontakteinrichtung sowie während des Auswerteschritts 3 für die direkte Übergabe der ortsaufgelösten Probenmengen an eine gesonderte Auswerteeinrichtung verwendet.

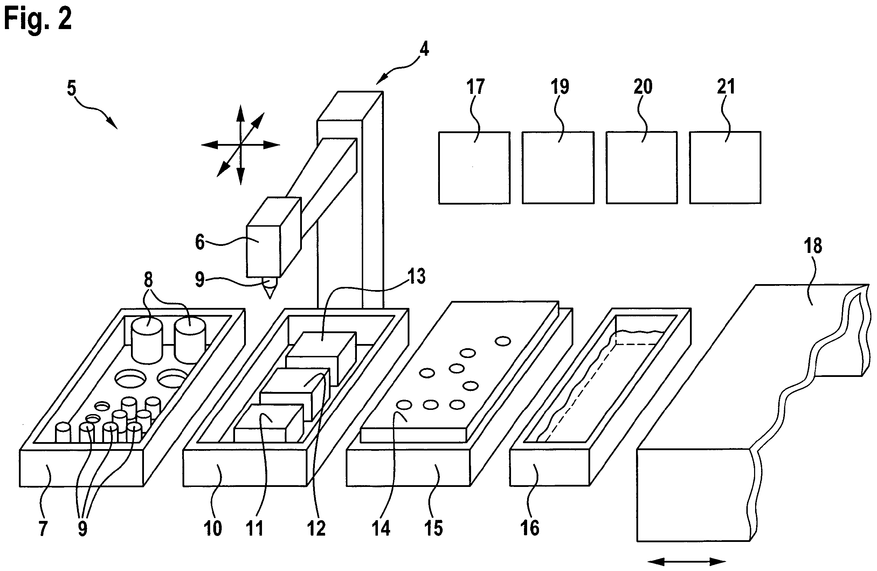

In Fig. 2 ist ein Ausführungsbeispiel für eine vollständig automatisierte Vorrichtung 5 zur Durchführung einer Dünnschichtchromatographie exemplarisch und zur Veranschaulichung vereinfacht dargestellt. Die automatisierte Pipettiereinrichtung 4 weist einen in allen drei Raumrichtungen verfahrbaren Pipettierkopf 6 auf. Der Pipettierkopf 6 kann aus einem Pipettenspitzen-Vorratsbehälter 7 jeweils eine einzelne Pipettenspitze 8, 9 ergreifen und für nachfolgende Pipettiervorgänge verwenden. In dem Pipettenspitzen-Vorratsbehälter 7 sind verschiedene Pipettenspitzen 8, 9 bevorratet, die sich in der Formgebung und in dem Nutzvolumen unterscheiden, so dass für verschiedene Auftragungsvorgänge eine jeweils an die Anforderungen angepasste Pipettenspitze 8, 9 ausgewählt und verwendet werden kann.

In einem benachbart angeordneten ersten Behälter 10 sind verschiedene Proben 11, 12, 13 angeordnet. Die Pipettiereinrichtung 4 kann mit der ausgewählten Pipettenspitze 9 eine kleine Menge der Probe 11 aufnehmen und auf eine Trennschicht 14 aufgeben, die auf einer Trägerplatte 15 fixiert ist. Die Trennschicht 14 weist eine Schichtdicke von beispielsweise 200 µm auf, wobei auch geringere Schichtdicken vorteilhaft und möglich sind. Die Trennschicht 14 weist beispielsweise Abmessungen von etwa 10 cm x 5 cm auf. Auch hier sind kleinere Abmessungen von beispielsweise 6 cm x 4 cm denkbar. Um weniger empfindlich bei der Positionierung und Aufgabe von der kleinen Menge der Probe 11 auf der Trennschicht 14 zu sein ist es vorteilhaft, wenn die Trennschicht 14 eine in Fig. 2 nicht dargestellte Konzentrierungszone aufweist.

Für nachfolgende Auftragungsschritte der weiteren Proben 12 und 13 wird zunächst die bereits benutzte Pipettenspitze 9 entsorgt und eine neue Pipettenspitze 8 oder 9 ergriffen, um anschließend die jeweils vorgegebenen Mengen der weiteren Proben 12 und 13 ebenfalls auf die Trennschicht 14 aufzugeben. Durch die Verwendung von jeweils neuen Pipettenspitzen 8, 9 wird eine Kontamination nachfolgender Auftragungsvorgänge durch ungewollt verbleibende Reste von vorausgegangenen Auftragungsvorgängen ausgeschlossen. Eine zwischenzeitliche Reinigung der automatisierten Vorrichtung 5 oder der Pipiettiereinrichtung 4 ist nicht erforderlich. Anschließend wird ebenfalls mit einer neuen Pipettenspitze 8 ein Fließmittel aus einem zweiten Vorratsbehälter 16 aufgenommen und auf die Trennschicht 14 aufgegeben. Die Entwicklung des Dünnschichtchromatogramms kann durch verschiedene Behandlungseinrichtungen 17 beeinflusst werden, die lediglich schematisch angedeutet sind. Eine Abdeckung 18 kann seitlich über die Trennschicht 14 verschoben werden, um eine Beeinträchtigung der Trennschicht 14 und des Dünnschichtchromatogramms durch Umgebungseinflüsse während des Entwicklungsschritts 2 zu reduzieren. Gleichzeitig kann durch geeignete Behandlungseinrichtungen 17, die in die Abdeckung 18 integriert sein können, die Entwicklung beschleunigt oder anderweitig vorteilhaft beeinflusst werden. Die Abdeckung 18 bildet in Verbindung mit umgebenden Gehäusebereichen einen im Wesentlichen geschlossenen Entwicklungsbehälter.

Nach dem Abschluss des Entwicklungsschritts 2 kann das Dünnschichtchromatogramm mit weiteren Nachbehandlungseinrichtungen 19 behandelt werden, um die Auswertung zu erleichtern und reproduzierbar werden zu lassen. Die ebenfalls nur schematisch angedeuteten Nachbehandlungseinrichtungen 19 können beispielsweise eine Wärmequelle oder eine Infrarot-Lichtquelle beinhalten. Es könnten auch weitere Reagenzien gegebenenfalls mit der Pipettiereinrichtung 4 auftragen werden. Auch eine Sprühvorrichtung, mit der beispielsweise eine Ninhydrinbehandlung der Trennschicht durchgeführt werden kann, ist möglich.

Abschließend kann das erzeugte Dünnschichtchromatogramm mit gesonderten Auswerteeinrichtungen 20 ausgewertet werden. Die Auswerteeinrichtungen 20 können optische Analysegeräte wie beispielsweise Lampen, bevorzugt UV-Lampen, und /oder Scannereinrichtungen umfassen. Es ist ebenfalls denkbar, dass mit einer gesonderten Pipettenspitze 8, 9 einzelne Bereiche der Trennschicht 14 herausgetrennt und an ein Massenspektrometer übergeben werden. Es ist ebenso möglich, ein Eluent aus einem nur schematisch angedeuteten Vorratsbehälter 21 mit der Pipettiereinrichtung 4 aufzunehmen, an einer vorgegebenen Position mit der Trennschicht 14 in Kontakt zu bringen und das sich ergebende Eluat einer Auswerteeinrichtung 20, beispielsweise einem Massenspektrometer zu übergeben.

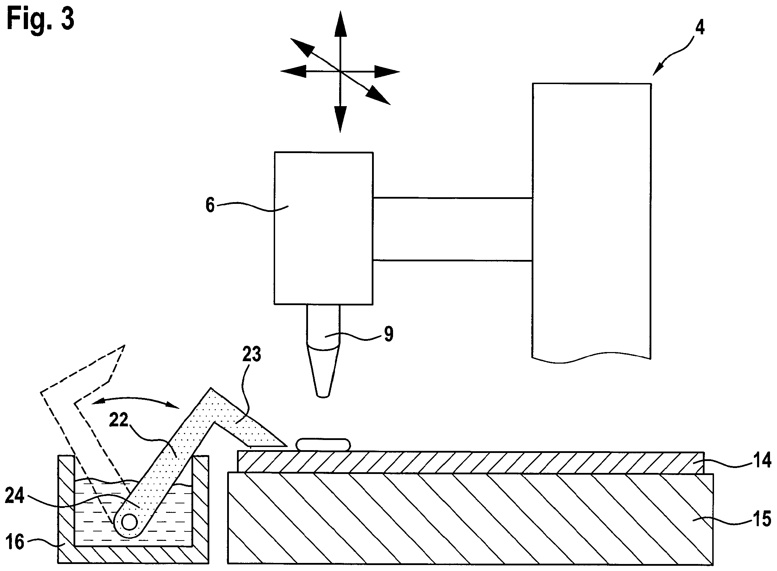

In Fig. 3 ist exemplarisch eine Kontakteinrichtung 22 für die Aufbringung des Fließmittels auf die Trennschicht 14 dargestellt. Die winkelförmige Kontakteinrichtung 22 ist schwenkbar gelagert und kann zwischen einer Kontaktposition, bei der ein abgewinkelter Endbereich 23 der Kontakteinrichtung 22 mit der Trennschicht 14 in Kontakt ist, und einer gestrichelt dargestellten Ausgangsposition hin und zurück verlagert werden. Die Kontakteinrichtung 22 besteht aus einem porösen und kapillaraktiven Material. Ein zweiter Endbereich 24 ist schwenkbar in dem zweiten Vorratsbehälter 16 gelagert, so dass auf Grund der Kapillarkräfte kontinuierlich Fließmittel aus dem zweiten Vorratsbehälter 16 in den abgewinkelten Endbereich 23 gefördert wird. Wenn bzw. solange sich die Kontakteinrichtung 22 in der Kontaktposition befindet, wird das Fließmittel über den abgewinkelten Endbereich 23 auf die Trennschicht 14 transportiert. Die Kontakteinrichtung 22 kann natürlich auch eine von dem exemplarisch dargestellten Ausführungsbeispiel abweichende Formgebung oder Lagerung aufweisen.

Somit liefert die vorliegende Erfindung ein Verfahren und eine Vorrichtung zur automatischen und zuverlässigen Durchführung von dünnschichtchromatographischen Trennungen. Es wurde gefunden, dass die Verwendung von austauschbaren Pipettenspitzen eine ausreichend genaue Auftragung der Reagenzien erlaubt und zugleich ideal geeignet ist, um Kontaminationen zu vermeiden. Bevorzugt kann der Pipettierautomat der erfindungsgemäßen Vorrichtung nicht nur zum Probenauftrag sondern auch zum Einbringen bzw. Aufbringen des Fließmmittels und des Elutionsmittels eingesetzt werden. Es wurde weiterhin gefunden, dass das erfindungsgemäße Verfahren und die erfindungsgemäße Vorrichtung besonders gut zur Durchführung von Trennungen auf kleinen Trennschichten mit geringem Durchmesser geeignet sind. Bevorzugt sind Trennschichten, deren längste Ausdehnung 10 cm oder weniger, bevorzugt zwischen 5 und 8 cm beträgt. Bevorzugt weisen diese Trennschichten eine Sorbensschicht mit Dicken unter 200 µm, bevorzugt zwischen 10 und 100 µm auf. In einer weiteren bevorzugten Ausführungsform weisen die Trennschichten eine Konzentrierungszone auf.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiel

### Beschreibung zur Durchführung einer vollautomatischen Dünnschichtchromatographie

Das Beispiel beschreibt die Durchführung einer vollautomatischen Dünnschichtchromatographie mit der Benutzung des NanoMate^{®} Systems (Advion) und einer horizontal Kammer für 5 x 5 cm Plattenformat (Desaga). Das NanoMate^{®} System ist ein Pipettiersystem kombiniert mit einer Nano Sprühquelle für die Kopplung zur Massenspektrometrie. Die Horizontalkammer wird mit einem speziell angefertigten Adapterteil in das NanoMate^{®} System eingebaut. Zusätzlich zur Horizontalkammer beinhaltet das Adapterteil auch mehrere Reservoirs die zum Einfüllen der Probe oder von Lösemitteln verwendet werden können.

### Probenauftragung:

Die Platte wird mit der Schicht nach oben in die Auflage der Horizontalkammer gelegt und die Probe wird in eines der Reservoirs gefüllt. Das Gerät wird so programmiert, dass die Probe mit einer frischen Pipettenspitze aufgenommen und auf die entsprechenden Stellen auf der Platte pipettiert wird.

### Chromatogramm Entwicklung:

Die für das Laufmittel notwendigen Lösemittel werden in Reservoirs gefüllt. Das Gerät wird so programmiert, dass die entsprechenden Mengen Lösemittel immer mit frischen Piptettenspitzen aufgenommen und in einem freien Reservoir zusammengegeben und gemischt werden. Nach dem Mischen nimmt das Gerät die notwendige Menge an Laufmittel auf und dosiert diese in den Laufmittelbehälter der Horizontalkammer. Über die Fritte wird das Laufmittel durch Kapillarkräfte automatisch aufgesaugt und durch den Kontakt zum Plattenmaterial in die Trennschicht transportiert, wodurch die Chromatogramm Entwicklung automatisch beginnt. Die Chromatogramm Entwicklung wird beendet indem das Laufmittel aufgebraucht ist oder das Gerät den Rest aus dem Laufmittelbehälter heraus pipettiert.

### Probeextraktion durch LESA^{®} (Liquid Extraction Surface Analysis)

Die Kopplung mit der Massenspektrometrie wird über den LESA^{®} Modus des Systems durchgeführt. Dazu wird die Original Halterung vom Hersteller in das Gerät eingebaut und die Platte mit der Schicht nach oben eingespannt. Der Umbau ist notwendig, weil die Software für den LESA^{®} Modus auf die original Halterung kalibriert ist. Das entsprechende Elutionsmittel wird in ein Reservoir eingefüllt oder im Gerät analog der Laufmittel Herstellung gemischt. Das Gerät wird so programmiert, dass ein Tropfen des Elutionsmittel mit der Substanzzone in Kontakt gebracht wird und die so gewonnene Probelösung automatisch über die Nanosprühquelle ins das Massenspektrometer einspeist wird.

## Patentansprüche

1. Verfahren zur Durchführung einer Dünnschichtchromatographie unter Verwendung einer Vorrichtung entsprechend einem oder mehreren der Ansprüche 6 bis 10, wobei mindestens eine flüssige Probe auf eine Trennschicht (14) aufgebracht wird, wobei anschließend ein Fließmittel auf die Trennschicht (14) aufgegeben und in Kontakt mit der Probe gebracht wird, und wobei nach einer Entwicklungsphase ein Dünnschichtchromatogramm entsteht, **dadurch gekennzeichnet,**
**dass** die flüssige Probe mit Hilfe eines Pipettierautomaten (4) mit einer für jeden Proben-Auftragungsvorgang neuen Pipettenspitze (8, 9) aus einem Proben-Vorratsbehälter (11, 12, 13) aufgenommen und auf die Trennschicht (14) aufgebracht wird und dass ein mit Fließmittel befüllter Fließmittel-Vorratsbehälter (16) über eine Kontakteinrichtung (22) aus einem kapillaraktiven Material mit der Trennschicht (14) verbunden wird.

2. Verfahren nach Anspruch 1, wobei das Fließmittel mit einer für jeden Fließmittel-Auftragungsvorgang neuen Pipettenspitze (8, 9) aus einem Fließmittel-Vorratsbehälter (16) aufgenommen und auf die Trennschicht (14) aufgegeben wird.

3. Verfahren nach einem der vorangehenden Ansprüche, wobei ein Eluent mit einer für jede Elution neuen Pipettenspitze (8, 9) aufgenommen und mit einem auszuwertenden Bereich der Trennschicht (14) in Kontakt gebracht wird und dass das Eluat einer Auswerteeinrichtung (20) zugeführt wird.

4. Verfahren nach einem der Ansprüche 1 bis 2, wobei mit einer für jeden Austrennvorgang neuen Pipettenspitze (8, 9) ein auszuwertender Bereich der Trennschicht (14) ausgestanzt und einer Auswerteeinrichtung (20) zugeführt wird.

5. Verfahren nach einem der Ansprüche 1 bis 2, wobei mit einer für jede Elution neuen Pipettenspitze (8, 9) ein auszuwertender Bereich der Trennschicht (14) bis auf den Basisträger abgedichtet, das im abgedichteten Bereich befindliche Sorbens mit einem Eluent in Kontakt gebracht wird und das entstehende Eluat einer Auswerteeinrichtung (20) zugeführt wird.

6. Vorrichtung (5) zur automatisierten Durchführung einer Dünnschichtchromatographie mit einer Trägerplatte (15) zur Aufnahme einer Trennschicht (14), mit einem ersten Vorratsbehälter (10, 11, 12, 13) für die Aufnahme einer Probe und mit einem zweiten Vorratsbehälter (16) für die Aufnahme eines Fließmittels und einer Kontakteinrichtung (22) aus einem kapillaraktiven Material, **dadurch gekennzeichnet, dass** die Vorrichtung (5) eine zumindest über eine Oberfläche der Trägerplatte (15) sowie über den ersten Vorratsbehälter (10, 11, 12, 13) und den zweiten Vorratsbehälter (16) verfahrbare automatische Pipettiereinrichtung (4) und einen Vorrat an Pipettenspitzen (8, 9) aufweist, die nacheinander von der Pipettiereinrichtung (4) aufgenommen, verwendet und anschließend wieder von der Pipettiereinrichtung (4) gelöst und entfernt werden können und dass die Trägerplatte (15) über eine Kontakteinrichtung (22) aus einem kapillaraktiven Material mit dem Vorratsbehälter (16) für das Fließmittel verbindbar ist.

7. Vorrichtung (5) nach Anspruch 6, wobei die Trägerplatte (15) verfahrbar in einem Gehäuse der Vorrichtung (5) angeordnet ist.

8. Vorrichtung (5) nach einem oder mehreren der Ansprüche 6 bis 7, wobei die Vorrichtung (5) einen im Wesentlichen geschlossenen Entwicklungsbehälter für die Aufnahme der Trägerplatte (15) aufweist.

9. Vorrichtung (5) nach einem oder mehreren der Ansprüche 6 bis 8, wobei die Vorrichtung (5) einen Vorratsbehälter (7) für Pipettenspitzen (8, 9) aufweist, und wobei der Vorratsbehälter (7) mindestens zwei verschiedene Arten von Pipettenspitzen (8, 9) enthält.

10. Vorrichtung (5) nach einem oder mehreren der Ansprüche 6 bis 9, wobei die Vorrichtung (5) einen Vorratsbehälter (21) für ein Elutionsmittel aufweist.

## Claims

1. Method for carrying out thin-layer chromatography using a device corresponding to one or more of Claims 6 to 10, wherein at least one liquid sample is applied to a separating layer (14), wherein a mobile phase is subsequently applied to the separating layer (14) and brought into contact with the sample, and wherein, after a development phase, a thin-layer chromatogram arises, **characterised in that** the liquid sample is taken up from a sample storage container (11, 12, 13) with the aid of an autopipette (4) using a new pipette tip (8, 9) for each sample application operation and applied to the separating layer (14), and **in that** a mobile-phase storage container (16) filled with mobile phase is connected to the separating layer (14) via a contact device (22) comprising a capillary-active material.

2. Method according to Claim 1, wherein the mobile phase is taken up from a mobile-phase storage container (16) using a new pipette tip (8, 9) for each mobile-phase application operation and applied to the separating layer (14).

3. Method according to one of the preceding claims, wherein an eluent is taken up using a new pipette tip (8, 9) for each elution and brought into contact with a separating layer (14) area to be evaluated, and wherein the eluate is fed to an evaluation device (20).

4. Method according to one of Claims 1 to 2, wherein a separating layer (14) area to be evaluated is stamped out using a new pipette tip (8, 9) for each separation operation and fed to an evaluation device (20).

5. Method according to one of Claims 1 to 2, wherein a separating layer (14) area to be evaluated is sealed off as far as the base support using a new pipette tip (8, 9) for each elution, the sorbent located in the sealed-off area is brought into contact with an eluent, and the eluate formed is fed to an evaluation device (20).

6. Device (5) for the automated performance of thin-layer chromatography, having a support plate (15) for the accommodation of a separating layer (14), having a first storage container (10, 11, 12, 13) for the accommodation of a sample and having a second storage container (16) for the accommodation of a mobile phase and a contact device (22) comprising a capillary-active material, **characterised in that** the device (5) has an automatic pipetting device (4) which can be moved at least over one surface of the support plate (15) and over the first storage container (10, 11, 12, 13) and the second storage container (16) and has a stock of pipette tips (8, 9) which can be taken up successively by the pipetting device (4), used and subsequently detached from the pipetting device (4) again and removed, and **in that** the support plate (15) can be connected to the storage container (16) for the mobile phase via a contact device (22) comprising a capillary-active material.

7. Device (5) according to Claim 6, wherein the support plate (15) is arranged in a movable manner in a housing of the device (5).

8. Device (5) according to one or more of Claims 6 to 7, wherein the device (5) has an essentially closed development container for the accommodation of the support plate (15) .

9. Device (5) according to one or more of Claims 6 to 8, wherein the device (5) has a storage container (7) for pipette tips (8, 9), and wherein the storage container (7) contains at least two different types of pipette tips (8, 9) .

10. Device (5) according to one or more of Claims 6 to 9, wherein the device (5) has a storage container (21) for an eluent.

## Revendications

1. Procédé pour mettre en œuvre une chromatographie sur couche mince en utilisant un dispositif qui correspond à une ou plusieurs des revendications 6 à 10, dans lequel au moins un échantillon de liquide est appliqué sur une couche de séparation (14), dans lequel une phase mobile est subséquemment appliquée sur la couche de séparation (14) et est amenée en contact avec l'échantillon, et dans lequel, après une phase de développement, un chromatogramme sur couche mince est obtenu, **caractérisé en ce que** l'échantillon de liquide est extrait à partir d'un moyen de contenance de stockage d'échantillon (11, 12, 13) à l'aide d'une autopipette (4) en utilisant une nouvelle pointe de pipette (8, 9) pour chaque opération d'application d'échantillon et est appliqué sur la couche de séparation (14), et **en ce qu'**un moyen de contenance de stockage de phase mobile (16) qui est rempli de phase mobile est connecté à la couche de séparation (14) via un dispositif de contact (22) qui comprend un matériau à action capillaire.

2. Procédé selon la revendication 1, dans lequel la phase mobile est extraite à partir d'un moyen de contenance de stockage de phase mobile (16) en utilisant une nouvelle pointe de pipette (8, 9) pour chaque opération d'application de phase mobile et est appliquée sur la couche de séparation (14).

3. Procédé selon l'une quelconque des revendications précédentes, dans lequel un éluant est extrait en utilisant une nouvelle pointe de pipette (8, 9) pour chaque élution et est amené en contact avec une zone de couche de séparation (14) à évaluer, et dans lequel l'éluat est alimenté sur un dispositif d'évaluation (20).

4. Procédé selon l'une quelconque des revendications 1 à 2, dans lequel une zone de couche de séparation (14) à évaluer est éliminée en utilisant une nouvelle pointe de pipette (8, 9) pour chaque opération de séparation et est alimentée sur un dispositif d'évaluation (20).

5. Procédé selon l'une quelconque des revendications 1 à 2, dans lequel une zone de couche de séparation (14) à évaluer est isolée en termes d'étanchéité jusqu'au support de base en utilisant une nouvelle pointe de pipette (8, 9) pour chaque élution, le sorbant qui est localisé dans la zone isolée en termes d'étanchéité est amené en contact avec un éluant, et l'éluat qui est formé est alimenté sur un dispositif d'évaluation (20).

6. Dispositif (5) pour la réalisation automatisée d'une chromatographie sur couche mince, comportant une plaque de support (15) pour la réception d'une couche de séparation (14), comportant un premier moyen de contenance de stockage (10, 11, 12, 13) pour la réception d'un échantillon et comportant un second moyen de contenance de stockage (16) pour la réception d'une phase mobile et un dispositif de contact (22) qui comprend un matériau à action capillaire, **caractérisé en ce que** le dispositif (5) comporte un dispositif de pipetage automatique (4) qui peut être déplacé au moins au-dessus d'une surface de la plaque de support (15) et au-dessus du premier moyen de contenance de stockage (10, 11, 12, 13) et du second moyen de contenance de stockage (16) et qui comporte une réserve de pointes de pipette (8, 9) qui peuvent être extraites de façon successive par le dispositif de pipetage automatique (4), qui peuvent être utilisées et qui peuvent subséquemment être séparées du dispositif de pipetage automatique (4) à nouveau et évacuées, et **en ce que** la plaque de support (15) peut être connectée au second moyen de contenance de stockage (16) pour la phase mobile via un dispositif de contact (22) qui comprend un matériau à action capillaire.

7. Dispositif (5) selon la revendication 6, dans lequel la plaque de support (15) est agencée d'une façon mobile dans un logement du dispositif (5).

8. Dispositif (5) selon une ou plusieurs des revendications 6 à 7, dans lequel le dispositif (5) comporte un moyen de contenance de développement essentiellement fermé pour la réception de la plaque de support (15).

9. Dispositif (5) selon une ou plusieurs des revendications 6 à 8, dans lequel le dispositif (5) comporte un moyen de contenance de stockage (7) pour les pointes de pipette (8, 9), et dans lequel le moyen de contenance de stockage (7) contient au moins deux types différents de pointes de pipette (8, 9).

10. Dispositif (5) selon une ou plusieurs des revendications 6 à 9, dans lequel le dispositif (5) comporte un moyen de contenance de stockage (21) pour un éluant.
